# EUROPÄISCHE PATENTSCHRIFT

(11) **EP 1 747 353 B1**
(45) Veröffentlichungstag und Bekanntmachung des Hinweises auf die Patenterteilung: **21.07.2010**
(21) Anmeldenummer: 05751937.3
(22) Anmeldetag: 04.05.2005
(51) Int. Cl.: F01N 1/00

(54) **WÄRMETAUSCHER FÜR VERBRENNUNGSMOTOREN**
HEAT EXCHANGER FOR INTERNAL COMBUSTION ENGINES
ECHANGEUR DE CHALEUR POUR MOTEURS A COMBUSTION INTERNE

(30) Priorität: 07.05.2004 DE 102004023319; 21.06.2004 DE 102004029863; 20.08.2004 DE 102004040667; 20.08.2004 DE 102004040668
(43) Veröffentlichungstag der Anmeldung: 31.01.2007
(73) Patentinhaber: Behr GmbH & Co. KG, 70469 Stuttgart (DE)
(72) Erfinder: BECK, Claus, 73734 Esslingen (DE); PALANCHON, Hervé, F-69970 Chaponnay (FR); ROSIN, Jürgen, 73630 Remshalden (DE)
(74) Vertreter: Grauel, Andreas
(86) Internationale Anmeldenummer: PCT/EP2005/004854
(87) Internationale Veröffentlichungsnummer: WO 2005/111385

(56) Entgegenhaltungen:
- EP-A- 0 987 427
- EP-A- 1 273 786
- EP-A- 1 288 603
- EP-A- 1 367 253
- WO-A-02/10574
- WO-A-03/098026
- DE-A1- 10 025 877
- DE-A1- 10 203 003
- DE-A1- 10 346 250
- DE-A1- 19 962 863

## Beschreibung

Die Erfindung betrifft einen Wärmetauscher für Verbrennungsmotoren nach dem Oberbegriff von Anspruch 1.

Im modernen Bau von Kraftfahrzeugen mit Verbrennungsmotoren werden zunehmend Wärmetauscher eingesetzt, mittels derer Wärme der Fahrzeugabgase an ein Kühlmittel abgegeben wird. Dies kann zu Zwecken der schnellen Aufheizung des Kühlmittels oder zu Zwecken der Kühlung des Abgases, zum Beispiel in Verbindung mit einem Abgas-Rückführsystem, gewünscht sein. Dabei treten insbesondere in Verbindung mit weiteren Komponenten und Aggregaten moderner Kraftfahrzeuge Probleme hinsichtlich der Abgasführung als auch des Bauraumes auf.

DE 102 03 003 A1 beschreibt einen Wärmetauscher für Abgase, bei dem ein erster und ein zweiter Strömungskanal für Abgase parallel in einem gemeinsamen Gehäuse angeordnet sind, wobei ein den Strömungskanälen vorgeordneter Ventilkanal die gleiche Strömungsrichtung aufweist wie die Strömungskanäle, also linear zu den Strömungskanälen angeordnet ist.

DE 100 25 877 A1 beschreibt einen Wärmetauscher für Abgase in mehreren Ausführungsformen, bei denen jeweils ein den Strömungskanälen vorgeordneter Ventilkanal eingangsseitig eine gleiche Strömungsrichtung aufweist wie die Strömungskanäle, also linear zu den Strömungskanälen angeordnet ist.

Die WO 02/10574 A1 offenbart einen Abgaskühler mit Bypass, wobei der Bypass an dem Abgaskühler vorbei geführt ist.

Die EP 1273786 A2 offenbart eine Umschalteinrichtung für eine Abgasrückführung.

Die EP 0987427 A1 offenbart eine Einrichtung zur Rückführung eines Abgasstroms.

Es ist die Aufgabe der Erfindung, einen eingangs genannten Wärmetauscher anzugeben, der hinsichtlich der Abgasführung besonders vorteilhaft ist.

Diese Erfindung wird für einen eingangs genannten Wärmetauscher erfindungsgemäß mit den kennzeichnenden Merkmalen des Anspruchs 1 gelöst.

Dadurch wird vorteilhaft erreicht, daß der Wärmetauscher auch bei begrenztem Bauraum, etwa im Motorraum eines Kraftfahrzeugs, flexibel angeordnet werden kann. Zudem ist es vorteilhaft, daß sich daß Ventilelement nicht in der gleichen Strömungsachse wie die Strömungskanäle befindet, da sich somit durch den pulsierenden Abgasstrom von Verbrennungsmotoren gebildete, drehzahlabhängige stehende Wellen weniger auf die Mechanik des Ventilelements auswirken. Ebenso werden längs- und quergerichtete Schwingungen des Wärmetauschergehäuses im Bereich des Ventilkanals reduziert, was ebenfalls günstig für Funktion und Lebensdauer der Ventilmechanik ist.

In einer bevorzugten Ausführungsform eines erfindungsgemäßen Wärmetauschers ist in Strömungsrichtung der Abgase der Ventilkanal vor den Strömungskanälen und ein Einlaßkanal vor dem Ventilkanal angeordnet, wobei besonders bevorzugt eine Strömungsachse des Einlaßkanals eine andere Richtung aufweist als die Strömungsachse des Ventilkanals und als die Strömungsachse der Strömungskanäle. Hierdurch ist eine stufenweise Krümmung der Abgasführung ermöglicht, so daß bei insgesamt kleiner Bauweise ein ungehinderter Abgasstrom zu gewährleistet ist. Besonders bevorzugt ist dabei ein Winkel zwischen der Strömungsachse des Ventilkanals und der Strömungsachse des Einlaßkanals größer als 30 Grad, um eine ausreichend große Umlenkung des Abgasstromes zu erreichen.

Ebenfalls bevorzugt ist ein Winkel zwischen der Strömungsachse des Ventilkanals und der Strömungsachse des Strömungskanals größer als 30 Grad, besonders bevorzugt größer als 40 Grad. Dabei können sich die Winkel zwischen Strömungskanal und Ventilkanal und Ventilkanal und Einlaßkanal hinsichtlich der Abgasführung addieren, um insgesamt besonders eine große Umlenkung des Abgasstromes zu erreichen, ohne damit verbundene Nachteile in nennenswerten Umfang in Kauf zu nehmen. Insbesondere eine hinsichtlich Verwirbelungen und Strömungswiderstand ungünstige Abgasführung, die auf kleinstem Raum eine Umlenkung des Abgasstromes von 90 Grad erzwingt, wird wirkungsvoll vermieden.

Um die zuvor genannten Nachteile in besonderem Maße zu vermeiden, ist besonders bevorzugt ein Winkel zwischen der Strömungsachse des Ventilkanals und der Strömungsachse des Strömungskanals kleiner als 60 Grad. Dies steht der zuvor erwähnten zweistufigen Umlenkung des Abgasstromes auf Gesamtwinkel von bis zu etwa 90 Grad nicht entgegen.

In einer bevorzugten Ausführungsform der Erfindung ist eine mittlere Strömungslänge eines der Strömungskanäle zumindest um einen Faktor zwei, besonders bevorzugt um einen Faktor 2,5 größer als eine mittlere Strömungslänge des Ventilkanals. Dabei wird unter Strömungslänge die mittlere Weglänge der Abgase verstanden, also etwa der Weg entlang einer Symmetrieachse eines Abgaskanals. Unter Zugrundelegung der durch die vorgegebenen Wärmetauscherleistung bedingte Dimensionierung der Strömungskanäle ist hierdurch eine besonders raumsparende Bauweise eines erfindungsgemäßen Wärmetauschers erreicht.

Weiterhin bevorzugt weist das Ventilelement genau ein stellbares Klappenelement auf, so daß nur eine geringe Anzahl an Bauteilen erforderlich ist. Hinsichtlich einer entsprechend einfachen und effektiven Mechanik des Ventilelements ist das Klappenelement bevorzugt an einer antreibbar drehbaren Welle aufgenommen.

Besonders bevorzugt weist der Ventilkanal eine an das Klappenelement anschließende Trennwand auf, wobei der Ventilkanal durch die Trennwand zumindest abschnittsweise in zwei Ventilkanalhälften geteilt ist. Dies ermöglicht zugleich eine einfache Bauweise als auch eine verwirbelungsarme Abgasführung.

In einer bevorzugten Ausführungsform der Erfindung ist der zweite Strömungskanal durchgängig im Wesentlichen parallel zu dem ersten Strömungskanal angeordnet, und besonders bevorzugt sind der erste Strömungskanal und der zweite Strömungskanal in einem gemeinsamen Gehäuse aufgenommen. Hierdurch wird jeweils eine kompakte Bauweise des Wärmetauschers begünstigt.

Durch die Anlage des Ventilelements an der Ausformung ist es vorteilhaft möglich, daß einer der Strömungskanäle jeweils besonders gut gegen den Durchfluß von Abgasen abdichtbar ist. Zudem ist ein vorzeitiger Materialverschleiß im Bereich einer Berührung von Ventilelement und Ventilkanal auf einfache Weise vermeidbar.

Vorteilhaft weist der Ventilkanal dabei einen kreisförmigen Querschnitt auf, und die Ausformung ist durch Verformung einer Wandung des Ventilkanals, insbesondere durch Prägung, ausbildbar. Hierdurch ist die Ausformung auf einfache Weise und kostengünstig herstellbar.

Durch die doppelte Wandung des zweiten Ventilkanals ist eine besonders gute Isolierung des durch diesen Kanal strömenden Abgases gegen einen Wärmetausch ermöglicht.

Vorteilhaft umfaßt der zweite Ventilkanal dabei ein Innenrohr, welches in einem Gehäuse aufgenommen ist, wobei eine Außenfläche des Innenrohrs zu dem Gehäuse beabstandet ist. Hierdurch ist es ermöglicht, daß der Wärmetauscher insgesamt kleinbauend gehalten werden kann, wobei insbesondere eine weitere Kombination des Gehäuses mit dem ersten Strömungskanal zu einer Baueinheit vorteilhaft ist.

Die Beabstandung des Gehäuses zu dem Innenrohr ist vorteilhaft mittels Abstandmitteln festlegbar. Diese können eine Mehrzahl von auf der Außenfläche des Innenrohres angeordneten Noppen umfassen, wodurch mit einfachen Mitteln eine doppelte Wandung des zweiten Strömungskanals bei guter thermischer Isolierung realisierbar ist.

Weiterhin ist es vorteilhaft vorgesehen, daß das Innenrohr unmittelbar mit einem Leitblech verbunden ist, wobei das Leitblech in dem Ventilkanal angeordnet ist. Insbesondere vorteilhaft ist dabei das Ventilelement bewegbar an dem Leitblech angeordnet und der Ventilkanal ist unmittelbar mit dem Gehäuse verbunden. Hierdurch ergibt sich eine zuverlässige und einfache Abfolge bei der Herstellung des erfindungsgemäßen Wärmetauschers, indem zunächst Leitblech, Innenrohr und Gehäuse zueinander ausgerichtet und miteinander verbunden werden. Danach kann dann der Ventilkanal über das Leitblech gebracht, zu diesem ausgerichtet und mit dem Gehäuse verbunden werden. Die jeweilige Verbindung kann durch Verschweißung oder Hartlöten erfolgen, wobei andere Arten der Festlegung nicht ausgeschlossen sind.

Je nach Anforderungen kann das Ventilelement einer erfindungsgemäßen Vorrichtung an einer einzigen Lagerstelle drehbar an dem Ventilkanal gelagert sein. Alternativ kann auch eine Lagerung an zwei beabstandeten Lagerstellen an dem Ventilkanal vorgesehen sein.

Weitere Merkmale und Vorteile der Erfindung ergeben sich aus dem nachfolgend geschilderten Ausführungsbeispiel sowie aus den abhängigen Ansprüchen.

Nachfolgend werden drei bevorzugte Ausführungsbeispiele eines erfindungsgemäßen Wärmetauschers beschrieben und anhand der anliegenden Zeichnungen näher erläutert.
- Fig. 1: zeigt eine Draufsicht auf ein erstes Ausführungsbeispiel eines erfindungsgemäßen Wärmetauscher von oben.
- Fig. 2: zeigt den Wärmetauscher gemäß Fig. 1 um 90° gedreht.
- Fig. 3: zeigt den Wärmetauscher gemäß Fig. 2 um 90° gedreht.
- Fig. 4: zeigt eine stirnseitige Draufsicht auf den Wärmetauscher gemäß Fig. 1.
- Fig. 5: zeigt eine schematische Schnittzeichnung durch den Ventilkanal des Wärmetauschers in der Orientierung gemäß Fig. 2.
- Fig. 6: zeigt eine aufgeschnittene räumliche Darstellung eines Aus- schnitts des Wärmetauschers aus Fig. 1.
- Fig. 7: zeigt eine räumliche Darstellung eines zweiten Ausführungs- beispiel eines erfindungsgemäßen Wärmetauschers.
- Fig. 8: zeigt eine Detailansicht des Wärmetauschers aus Fig. 7, wobei das Innere des Ventilkanals dargestellt ist.
- Fig. 9: zeigt eine räumliche Ansicht des Ventilelements des Wärme- tauschers aus Fig. 7 und Fig. 8.
- Fig. 10: zeigt eine räumliche Ansicht eines dritten Ausführungsbeispiels eines erfindungsgemäßen Wärmetauschers, wobei innere Bauteile des Wärmetauschers teilweise dargestellt sind.
- Fig. 11: zeigt eine schematische Draufsicht von oben auf ein Detail des Wärmetauschers aus Fig. 10.
- Fig. 12: zeigt eine schematische Draufsicht auf das Detail von Fig. 11 von der Seite.
- Fig. 13: zeigt eine schematische Draufsicht auf das Detail von Fig. 11 von vorne.
- Fig. 14: zeigt eine schematische Draufsicht auf ein Innenrohr des Wärme-tauscher aus Fig. 10 bis Fig. 8.
- Fig. 15: zeigt eine räumliche Ansicht eines Details eines erfindungs- gemäßen Wärmetauschers.

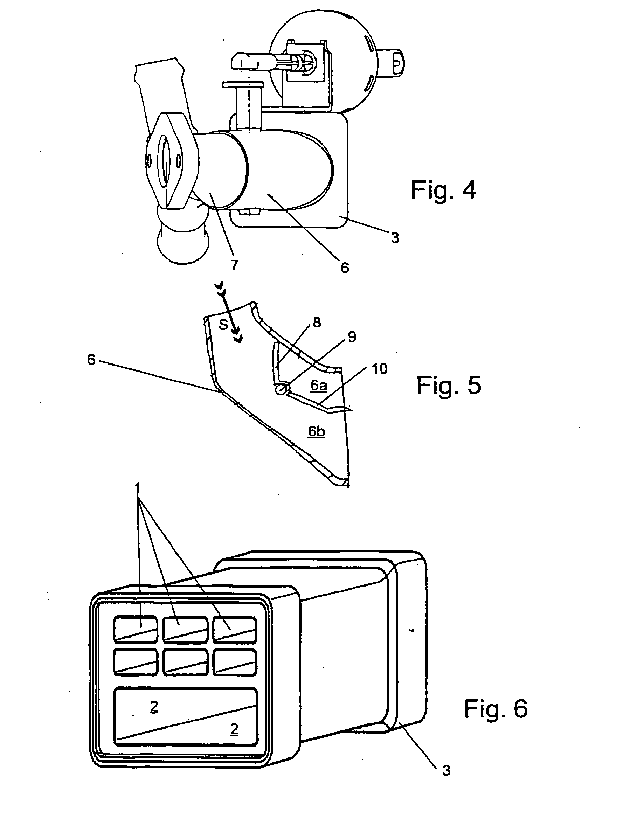

Der erfindungsgemäße Wärmetauscher gemäß dem ersten Ausführungsbeispiel umfaßt einen ersten Strömungskanal 1 und einen zweiten Strömungskanal 2, wobei vorliegend der erste Strömungskanal als Mehrheit von parallelen Einzelkanälen ausgebildet ist (siehe Fig. 6). Fig. 6 zeigt, daß die beiden Strömungskanäle parallel zueinander angeordnet und in dem gleichen Gehäuse 3 untergebracht sind.

Eine Leitung 4 zur Führung eines flüssigen Kühlmittels ist ebenfalls in dem Gehäuse 3 geführt und tritt an einem einlaßseitigen Anschluß 4a und einem auslaßseitigen Anschluß 4b jeweils aus dem Gehäuse heraus. Die Leitung 4 steht innerhalb des Gehäuses lediglich mit dem ersten Strömungskanal in wesentlichem Wärmekontakt, so daß ein relevanter Wärmeaustausch zwischen Abgas und Kühlmittel nur dann erfolgt, wenn die erste Strömungsleitung 1 vom Abgas durchströmt wird.

Der Wärmetauscher weist in Strömungsrichtung S der Abgase endseitig einen Auslaßkanal 5 auf, der vorliegend hinsichtlich des Abgasstromes parallel zu den Strömungskanälen ausgerichtet ist. Für besondere Anforderungen kann es jedoch bevorzugt vorgesehen sein, daß der Auslaßkanal 5 winkelig zu den Strömungskanälen 1, 2 verläuft.

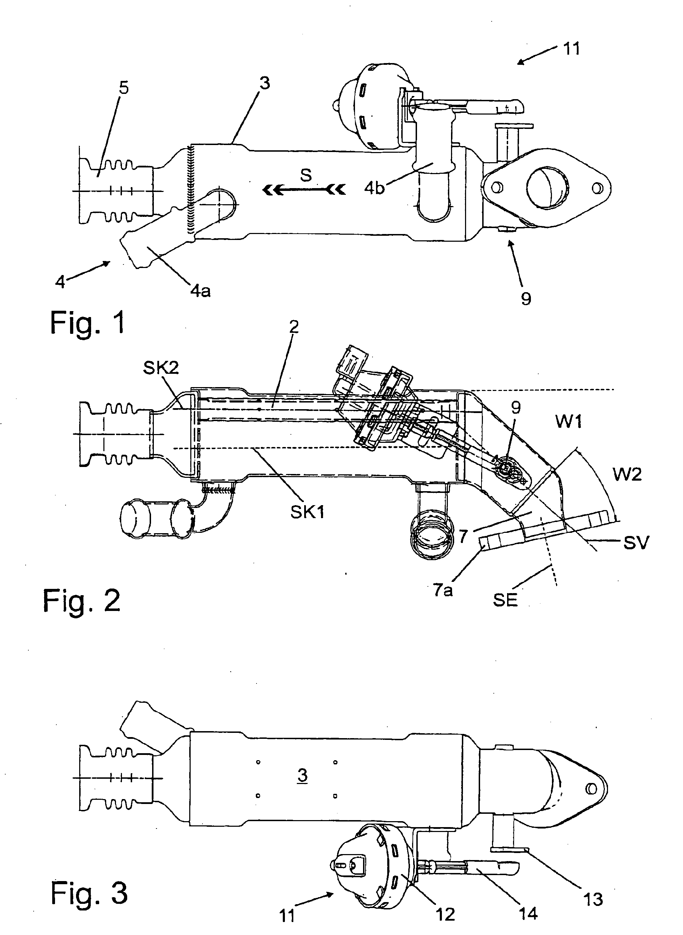

In Strömungsrichtung S vor den Strömungskanälen 1, 2 ist ein Ventilkanal 6 angeordnet, der mit dem Gehäuse 3 verschweißt ist. Der Ventilkanal 6 ist weist einen kreisförmigen Querschnitt auf und ist unter einem Winkel W1 von etwa 42° gegenüber den Strömungskanälen 1, 2 an dem Gehäuse 3 angebracht. Dieser Winkel besteht zwischen einer eingangsseitigen Strömungsachse SV und jeweils Strömungsachsen SK1, SK2 des ersten Strömungskanals 1 und zweiten Strömungskanals 2 (siehe Fig. 2).

In Strömungsrichtung S vor dem Ventilkanal 6 ist ein Einlaßkanal 7 angeschweißt, der eingangsseitig über einen Flansch 7a mit der weiteren Abgasleitung verbindbar ist. Eine einlaßseitige Strömungsachse SE des Einlaßkanals schließt mit der eingangsseitigen Strömungsachse SV des Ventilkanals einen Winkel W2 von 35° ein. Die Winkel W1 und W2 liegen in einer Ebene, so daß die Strömungsachsen SE des Einlaßkanals und die Strömungsachsen SK1, SK2 der Strömungskanäle 1, 2 insgesamt einen Winkel von 77° einschließen. Alternativ können die Winkel jedoch auch in verschiedenen Ebenen liegen und von den vorliegenden Werten abweichen, um eine Anpassung an eine jeweils gegebenen Abgasführung zu ermöglichen.

In dem Ventilkanal 6 ist ein als antreibbar bewegbare Klappe ausgebildetes Klappenelement 8 aufgenommen (siehe Fig. 5). Die Klappe 8 ist fest mit einer drehbaren Welle 9 verbunden, welche sich entlang einer endseitigen Kante der Klappe 8 und senkrecht durch den Ventilkanal 6 erstreckt. Zudem ist ein festes Leitblech 10 in dem Ventilkanal vorgesehen, welches als Fortführung der Ventilklappe dient. bedingt durch das Leitblech 10 ist ein auslaß-' seitiger Endbereich des Ventilkanals in eine erste Ventilkanalhälfte 6a und eine zweite Ventilkanalhälfte 6b unterteilt, wobei jede der Ventilkanalhälften 6a, 6b jeweils mit einem der Strömungskanäle 1, 2 verbunden sind. Durch das Leitblech 10, die Klappe 8 und die Welle 9 wird daher insgesamt ein Ventilelement ausgebildet, durch welches der Abgasstrom wahlweise in zumindest zwei verschiedene Kanäle geleitet werden kann.

Die Klappe 8 ist an ihrer der Welle 9 gegenüberliegenden Kante gebogen bzw. elliptisch ausgeformt, um eine dichtende Passung zu der Wand des im Querschnitt kreisförmigen Ventilkanals 6 zu erreichen. Bevorzugt kann die Wand des Ventilkanals im Bereich der Anlage der Ventilklappe eine entsprechende Bearbeitung aufweisen.

Die Klappe 8 ist über einen Antrieb 11 der Welle 9 bewegbar, wobei der Antrieb 11 vorliegend eine Unterdruckdose 12 umfaßt, durch welche eine Schubstange 13 bewegbar ist. Die Schubstange 14 ist endseitig mit einem an der Welle 9 festgelegten Drehzapfen 13 über ein Kugelgelenk verbunden. Hierdurch führt eine Schub- oder Zugbewegung der Schubstange 14 zu einer Drehung der Welle 9 und somit zu einer Verstellung der Klappe 8. Je nach Stellung der Klappe kann dann Abgas gar nicht, zu beliebigem Anteil oder vollständig durch den dem Wärmetausch dienenden ersten Strömungskanal 1 geleitet werden.

Die Dimensionierung des Wärmetauschers ist vorteilhaft so ausgelegt, daß er insgesamt kleinbauend ist, ohne den Abgasstrom zu behindern. Mittlere Strömungslängen der beiden Strömungskanäle 1, 2 sind dabei jeweils gleich und entsprechen der geometrischen Länge der beiden Kanäle. Eine mittlere Strömungslänge des Ventilkanals 6 ist etwa die geometrische Länge einer Mittellinie des Ventilkanals 6. Vorliegend ist die mittlere Strömungslänge eines Strömungskanals 1, 2 rund 2,7-fach größer als die mittlere Strömungslänge des Ventilkanals 6. Somit steht unter Beibehaltung der Vorteile der Erfindung der überwiegende Teil der Baulänge des Wärmetauschers für die eigentliche Wärmetauschung zur Verfügung.

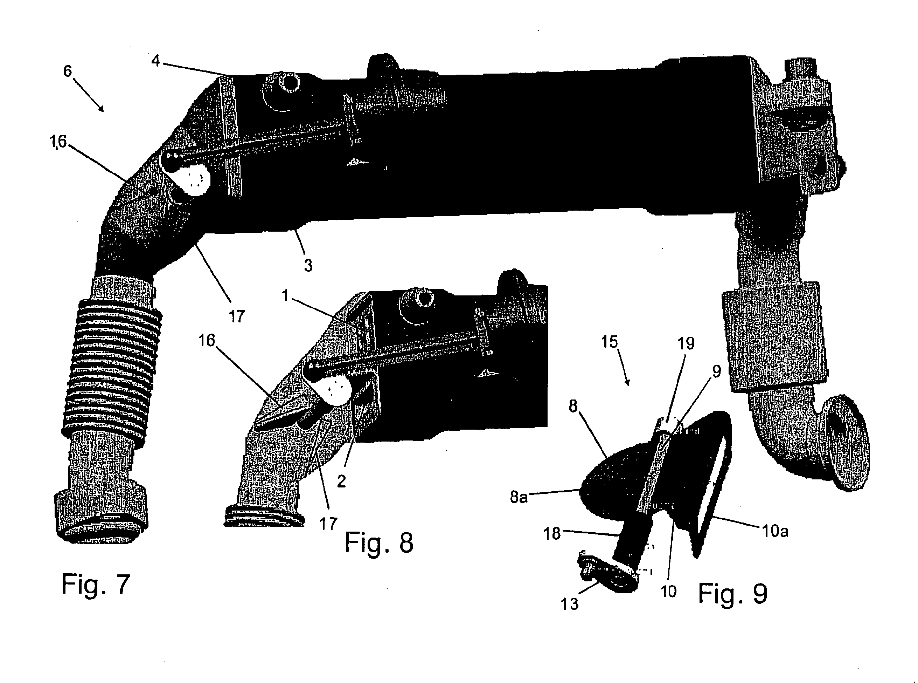

Der Wärmetauscher gemäß dem zweiten Ausführungsbeispiel (Fig. 7 bis Fig. 9) weist wie im ersten Ausführungsbeispiel einen Ventilkanal 6 auf, der gegenüber den Strömungskanälen 1, 2 winkelig angeordnet ist. Das Ventilelement 15 umfaßt ein Leitblech 10, an welchem eine an einer Welle 9 aufgenommene Ventilklappe 8 angeordnet ist.

Der Ventilkanal 6 umfaßt einen Abschnitt mit im wesentlichen kreisförmigem Querschnitt. In der Wandung dieses Abschnitts sind Ausformungen vorgesehen, an denen ein Randbereich 8a der Klappe 8 flächig anliegt, wenn sich die Klappe in einer Endstellung befindet. Der Anlage an die erste Ausformung 16 ist dabei die Durchleitung des Abgasstroms durch den zweiten Strömungskanal 2 und der Anlage an die Ausformung 17 die Durchleitung durch den ersten Strömungskanal 1 zugeordnet. Fig. 8 zeigt die Durchleitung durch den zweiten Strömungskanal.

Die Ausformungen 16, 17 sind jeweils durch Einpressung eines entsprechend geformten Stempels in die Wandung des Ventilkanals 6 hergestellt, so daß sie von außen sichtbar sind. Durch die flächige Anlage der Klappe 8 an den Ausformungen 16, 17 ist die Dichtung der Klappe verbessert und ein vibrierendes Anschlagen der Klappe gegen die Wandung des Ventilkanals 6 verringert.

Das Ventilelement 15 weist gemäß Fig. 9 eine erste Lagerstelle 18 und eine zweite, beabstandete Lagerstelle 19 auf. Die Welle 9 ist jeweils mit jeder der Lagerstellen an dem Ventilkanal 6 gelagert, wobei die erste Lagerstelle einem Durchbruch des Ventilkanals zugeordnet ist und die zweite Lagerstelle 19 einer sackartigen Aufnahme an dem Ventilkanal 6 auf der dem Durchbruch gegenüberliegenden Seite. Es kann aber auch vorgesehen sein, daß auf die zweite Lagerstelle 19 verzichtet wird, so daß die Welle lediglich im Bereich eines Durchtritts durch den Ventilkanal 6 an einer einziger Lagerstelle 18 drehbar an dem Ventilkanal 6 aufgenommen ist.

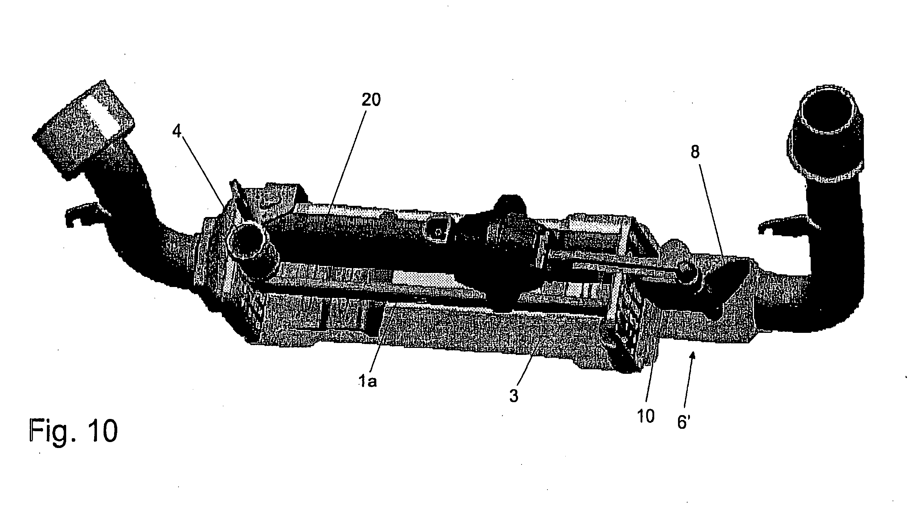

Der Wärmetauscher gemäß dem dritten Ausführungsbeispiel (Fig. 10 bis Fig. 14) weist im Unterschied zu den vorherigen Ausführungsbeispielen einen Ventilkanal 6' auf, der parallel zu den Strömungskanälen 1, 2 ausgerichtet ist. Der Wärmetauscher umfaßt ein Gehäuse 3, in dem insgesamt fünfzehn parallele Röhren 1a angeordnet sind, die zusammen den ersten Strömungskanal 1 bilden. Die Wandungen der Röhren 1a sind unmittelbar von dem Kühlmittel umströmt, welches durch das Gehäuse 3 fließt.

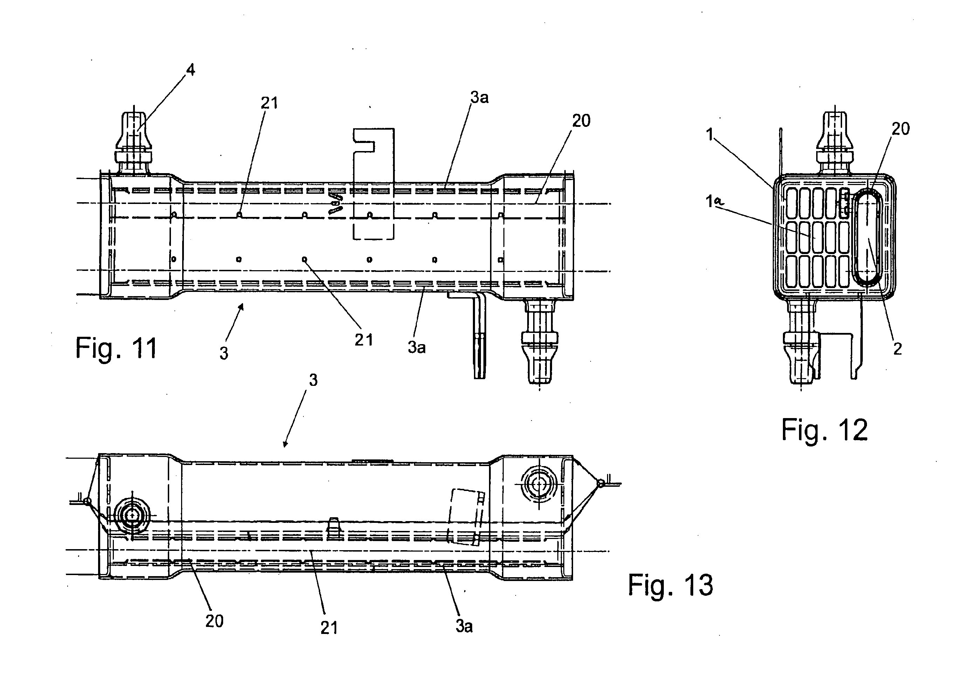

Der zweite Strömungskanal 2 ist ebenfalls in dem Gehäuse 3 aufgenommen. Der Strömungskanal 2 umfaßt eine Innenwandung 3a, welche in Fig. 11 und Fig. 13 als gestrichelte Linie dargestellt ist und als zweiseitig offener, rohrartiger Durchgang durch das Gehäuse 3 ausgebildet ist. Ferner umfaßt der zweite Strömungskanal ein Innenrohr 20, welches in den Durchgang eingeführt ist. Eine Außenfläche des Innenrohrs 20 umfaßt eine Anzahl von Abstandsmitteln 21, welche als überstehende Noppen auf der Außenfläche des Innenrohrs 20 ausgebildet sind. Im in den Durchgang eingeschobenen Zustand berühren lediglich die Noppen 21 die Innenwandung 3a des Gehäuses 3 (siehe insbesondere Fig. 13), so daß der thermische Kontakt zwischen dem vom Kühlmittel umströmten Durchgang des Gehäuses und dem vom Abgas durchströmten Innenrohr 20 sehr klein ist. Insgesamt ist durch die beschriebene Anordnung eine doppelte Wandung des zweiten Ventilkanals 2 mit einer ersten Wandung (Gehäusedurchgang 3a) und einer zweiten Wandung (Innenrohr 20) ausgebildet.

Das Innenrohr 20 und der Durchgang 3a des Gehäuses weisen einen länglichen Querschnitt auf und schließen an ihren Stirnseiten jeweils bündig miteinander ab.

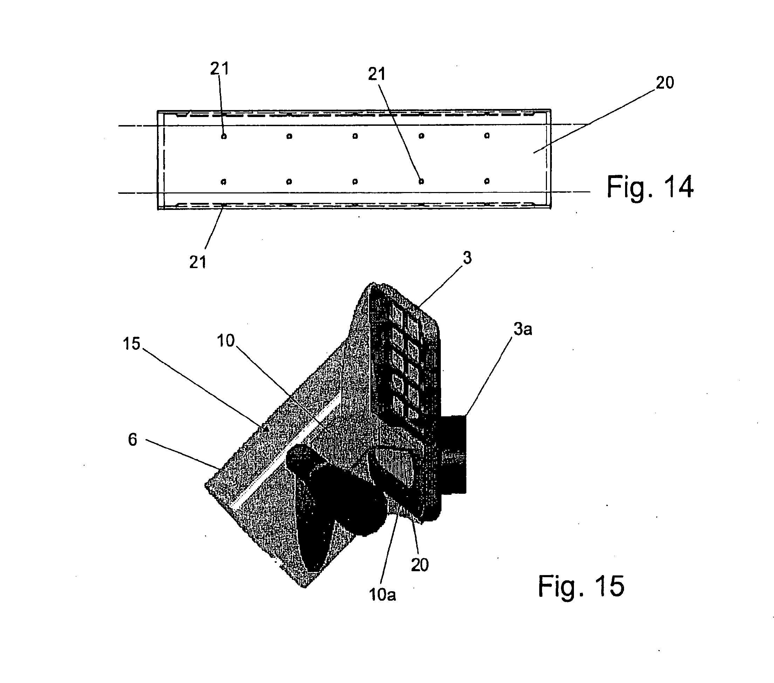

Die Detaildarstellung gemäß Fig. 15 zeigt im Gegensatz zu Fig. 10 einen Ventilkanal 6 mit gewinkelter Ausrichtung, entspricht jedoch im Hinblick auf Anordnung und Festlegung von Gehäuse 3, Innenrohr 20 und Ventilelement 15 dem dritten Ausführungsbeispiel. Die Darstellung von Fig. 15 zeigt eine bevorzugte Reihenfolge der Montage und Festlegung der Bauteile: Das Leitblech 10 umfaßt einen abgewinkelten Rand 10a mit einer dem Querschnitt des Innenrohrs 20 angepaßten Durchbrechung. Zunächst wird das Leitblech 10 mit einer Stirnseite des Innenrohrs 20 um den Rand der Durchbrechung herum verschweißt. Diese Einheit wird dann in den Durchgang 3a des Gehäuse 3 eingeschoben, wobei aufgrund der Noppen 21 regelmäßig eine gute reibschlüssige Halterung des Innenrohrs erreicht ist. Nachfolgend wird das Innenrohr und/oder das Leitblech 10 mit dem Gehäuse verschweißt, wobei gegebenenfalls ein Anpunkten ausreichend ist.

Hiernach wird der Ventilkanal 6 über das Leitblech 10 geschoben und gegebenenfalls die Ventilklappe 8 und die Welle 9 montiert. Nach genauer Ausrichtung des Ventilkanals 6 zum Ventilelement 15 wird der Ventilkanal 6 mit dem Gehäuse mit einer um die Stirnseite des Gehäuses umlaufenden Schweißnaht verschweißt.

Je nach Anforderungen sind die jeweiligen besonderen Merkmale der beschriebenen Ausführungsbeispiele nicht auf diese beschränkt, sondern frei miteinander kombinierbar, wobei gegebenenfalls durch bestimmte Kombinationen besonders vorteilhafte Wärmetauscher ausbildbar sind. Insbesondere sind Ausformung, Halterung und Montage des Innenrohrs 20 auf die ersten beiden Ausführungsbeispiele anwendbar, und die Ausformungen 16, 17 des Ventilkanals zur Anlage der Ventilklappe 8 sind nicht auf Ventilkanäle mit winkeliger Ausrichtung beschränkt.

### BEZUGSZEICHENLISTE

- 1: erster Strömungskanal
- 1 a: Röhre
- 2: zweiter Strömungskanal
- 3: Gehäuse
- 3a:
- 4: Leitung
- 4a: einlaßseitiger Anschluß
- 4b: auslaßseitiger Anschluß
- 5: Auslaßkanal
- 6, 6': Ventilkanal
- 6a: erste Ventilkanalhälfte
- 6b: zweite Ventilkanalhälfte
- 7: Einlaßkanal
- 8: Klappe
- 8a: Rand der Klappe
- 9: Welle
- 10: Leitblech
- 11: Antrieb
- 12: Unterdruckdose
- 13: Drehzapfen
- 14: Schubstange
- 15: Ventilelement
- 16: erste Ausformung
- 17: zweite Ausformung
- 18: erste Lagerstelle
- 19: zweite Lagerstelle
- 20: Innenrohr
- 21: Abstandmittel, Noppen
- W1: Winkel Eingang Ventilkanal zu Strömungskanal
- W2: Winkel Einlaßkanal zu Ventilkanal
- S: Strömungsrichtung
- SK1: Strömungsachse erster Strömungskanal
- SK2: Strömungsachse zweiter Strömungskanal
- SV: einlaßseitige Strömungsachse Ventilkanal
- SE: einlaßseitige Strömungsachse Einlaßkanal

## Patentansprüche

1. Wärmetauscher für Verbrennungsmotoren, umfassend einen ersten, länglichen Strömungskanal (1) zur Durchführung von Abgasen des Verbrennungsmotors,
einen zweiten, zu dem ersten Strömungskanal (1) benachbart angeordneten Strömungskanal (2) zur Durchführung der Abgase,
eine von dem zweiten Strömungskanal (2) getrennte Leitung (4) zur Durchführung eines Mediums, insbesondere eines Kühlmittels,
wobei Wärmeenergie zwischen dem Abgas des ersten Strömungskanals (1) und dem Medium der Leitung (4) austauschbar ist, und
wobei Wärmeenergie zwischen dem Abgas in dem zweiten Strömungskanal (2) und dem Medium in der Leitung zumindest nicht in erheblichem Umfang austauschbar ist, und wobei der zweite Strömungskanal (2) durchgängig im wesentlichen parallel zu dem ersten Strömungskanal (1) angeordnet ist, und einen Ventilkanal (6) mit einem stellbaren Ventilelement (8, 9, 10), wobei durch eine Stellung des Ventilelements (8, 9, 10) eine Verteilung der Abgase auf den ersten Strömungskanal (1) und den zweiten Strömungskanal (2) einstellbar ist, **dadurch gekennzeichnet, dass** der erste Strömungskanal (1) und der zweite Strömungskanal (2) in einem gemeinsamen Gehäuse (3) aufgenommen sind und dass eine eingangsseitige Strömungsachse (SV) des Ventilkanals eine andere Richtung aufweist als eine Strömungsachse (SK1) des ersten Strömungskanals, wobei in Strömungsrichtung der Abgase der Ventilkanal (6) vor den Strömungskanälen (1, 2) und ein Einlaßkanal (7) vor dem Ventilkanal (6) angeordnet sind, und wobei eine Strömungsachse (SE) des Einlaßkanals eine andere Richtung aufweist als die Strömungsachse (SV) des Ventilkanals und als die Strömungsachsen (SK1, SK2) der Strömungskanäle (1, 2).

2. Wärmetauscher nach Anspruch 1, **dadurch gekennzeichnet, daß** ein Winkel (W2) zwischen der Strömungsachse des Ventilkanals und der Strömungsachse (SE) des Einlaßkanals größer als 30 Grad ist.

3. Wärmetauscher nach einem der Ansprüche 1 bis 2, **dadurch gekennzeichnet, daß** eine mittlere Strömungslänge eines der Strömungskanäle (1, 2) zumindest um einen Faktor zwei größer ist als eine mittlere Strömungslänge des Ventilkanals (6).

4. Wärmetauscher nach einem der Ansprüche 1 bis 2, **dadurch gekennzeichnet, daß** eine mittlere Strömungslänge eines der Strömungskanäle (1, 2) zumindest um einen Faktor 2,5 größer ist als eine mittlere Strömungslänge des Ventilkanals (6).

5. Wärmetauscher nach einem der Ansprüche 1 bis 4, **dadurch gekennzeichnet, daß** ein Winkel (W1) zwischen der Strömungsachse (SV) des Ventilkanals und der Strömungsachse (SK1) des ersten Strömungskanals (1) größer als 30 Grad ist.

6. Wärmetauscher nach einem der Ansprüche 1 bis 5, **dadurch gekennzeichnet, daß** ein Winkel (W1) zwischen der Strömungsachse (SV) des Ventilkanals und der Strömungsachse (SK1) des ersten Strömungskanals (1) größer als 40 Grad ist.

7. Wärmetauscher nach einem der Ansprüche 1 bis 6, **dadurch gekennzeichnet, daß** ein Winkel zwischen der Strömungsachse (SV) des Ventilkanals und der Strömungsachse (SK1) des ersten Strömungskanals kleiner als 60 Grad ist.

8. Wärmetauscher nach einem der Ansprüche 1 bis 7, **dadurch gekennzeichnet, daß** das Ventilelement (8, 9, 10) genau ein stellbares Klappenelement (8) aufweist.

9. Wärmetauscher nach Anspruch 8, **dadurch gekennzeichnet, daß** das Kappenelement (8) an einer antreibbar drehbaren Welle (9) aufgenommen ist.

10. Wärmetauscher nach Anspruch 8 oder 9, **dadurch gekennzeichnet, daß** der Ventilkanal (6) eine an das Klappenelement (8) anschließende Trennwand (10) aufweist, wobei der Ventilkanal (6) durch die Trennwand (10) zumindest abschnittsweise in zwei Ventilkanalhälften (6a, 6b) geteilt ist.

11. Wärmetauscher nach einem der Ansprüche 1 bis 10, **dadurch gekennzeichnet, daß** der Ventilkanal mit dem Gehäuse verbunden, insbesondere verschweißt ist.

12. Wärmetauscher nach einem der Ansprüche 1 bis 11, **dadurch gekennzeichnet, daß** der Ventilkanal (6) eine Ausformung (16, 17) aufweist, wobei das Ventilelement (8, 9, 10) zumindest in einer Endstellung im wesentlichen flächig an der Ausformung (16, 17) anliegt.

13. Wärmetauscher nach Anspruch 12, **dadurch gekennzeichnet, daß** der Ventilkanal (6) einen im Wesentlichen kreisförmigen Querschnitt aufweist.

14. Wärmetauscher nach Anspruch 12 oder 13, **dadurch gekennzeichnet, daß** die Ausformung (16, 17) durch Verformung einer Wandung des Ventilkanals (6), insbesondere durch Pressung oder Prägung, ausbildbar ist.

15. Wärmetauscher nach einem der Ansprüche 1 bis 14, **dadurch gekennzeichnet, daß** der zweite Strömungskanal (2) eine doppelte Wandung (3a, 20) aufweist.

16. Wärmetauscher nach Anspruch 15, **dadurch gekennzeichnet, daß** der zweite Strömungskanal ein Innenrohr (20) umfaßt, welches in einem Gehäuse (3, 3a) aufgenommen ist, wobei eine Außenfläche des Innenrohrs (20) zu dem Gehäuse (3, 3a) beabstandet ist.

17. Wärmetauscher nach Anspruch 16, **dadurch gekennzeichnet, daß** das Innenrohr (20) Abstandsmittel (21) umfaßt, mittels derer die Beabstandung des Innenrohrs (20) zu dem Gehäuse (3) festlegbar ist.

18. Wärmetauscher nach Anspruch 17, **dadurch gekennzeichnet, daß** die Abstandmittel eine Mehrzahl von auf der Außenfläche des Innenrohres angeordneten Noppen (21) umfassen.

19. Wärmetauscher nach einem der Ansprüche 16 bis 18, **dadurch gekennzeichnet, daß** das Innenrohr mit einem Leitblech (10) unmittelbar verbunden ist, wobei das Leitblech (10) in dem Ventilkanal (6) angeordnet ist.

20. Wärmetauscher nach Anspruch 19, **dadurch gekennzeichnet, daß** eine Ventilklappe (8, 9) bewegbar an dem Leitblech angeordnet ist.

21. Wärmetauscher nach Anspruch 19 oder 20, **dadurch gekennzeichnet, daß** der Ventilkanal (6) mit dem Gehäuse (3) unmittelbar verbunden ist.

22. Wärmetauscher nach einem der Ansprüche 1 bis 21, **dadurch gekennzeichnet, daß** das Ventilelement (8, 9, 10) an nur einer Lagerstelle (18) drehbar an dem Ventilkanal (6) gelagert ist.

23. Wärmetauscher nach einem der Ansprüche 1 bis 22, **dadurch gekennzeichnet, daß** das Ventilelement (8, 9, 10) an zwei beabstandeten Lagerstellen (18, 19) drehbar an dem Ventilkanal (6) gelagert ist.

## Claims

1. A heat exchanger for internal combustion engines, comprising a first, elongated flow channel (1) for conducting through exhaust gases of the internal combustion engine,
a second flow channel (2) disposed adjacent to the first flow channel (1) for conducting through the exhaust gases,
a line (4) which is separated from the second flow channel (2) for conducting through a medium, in particular a coolant,
thermal energy being exchangeable between the exhaust gas of the first flow channel (1) and the medium of the line (4), and
thermal energy being exchangeable between the waste gas in the second flow channel (2) and the medium in the line at least not to a significant extent, and the second flow channel (2) being continuously disposed substantially parallel to the first flow channel (1), and further comprising a valve channel (6) having an adjustable valve element (8, 9, 10), with a distribution of the exhaust gases to the first flow channel (1) and the second flow channel (2) being adjustable by way of a position of the valve element (8, 9, 10),
**characterized in that** the first flow channel (1) and the second flow channel (2) are accommodated in a common housing (3), and a flow axis (SV) of the valve channel on the inlet side has a different direction than a flow axis (SK1) of the first flow channel, wherein in the flow direction of the exhaust gases the valve channel (6) is disposed upstream of the flow channels (1, 2) and an inlet channel (7) is disposed upstream of the valve channel (6), and wherein a flow axis (SE) of the inlet channel has a different direction than the flow axis (SV) of the valve channel and than the flow axes (SK1, SK2) of the flow channels (1, 2).

2. The heat exchanger according to claim 1, **characterized in that** an angle (W2) between the flow axis of the valve channel and the flow axis (SE) of the inlet channel is greater than 30 degrees.

3. A heat exchanger according to any one of claims 1 to 2, **characterized in that** a mean flow length of one of the flow channels (1, 2) is greater by at least a factor of two than a mean flow length of the valve channel (6).

4. A heat exchanger according to any one of claims 1 to 2, **characterized in that** a mean flow length of one of the flow channels (1, 2) is greater by at least a factor of 2.5 than a mean flow length of the valve channel (6).

5. A heat exchanger according to any one of claims 1 to 4, **characterized in that** an angle (W1) between the flow axis (SV) of the valve channel and the flow axis (SK1) of the first flow duct (1) is greater than 30 degrees.

6. A heat exchanger according to any one of claims 1 to 5, **characterized in that** an angle (W1) between the flow axis (SV) of the valve channel and the flow axis (SK1) of the first flow duct (1) is greater than 40 degrees.

7. A heat exchanger according to any one of claims 1 to 6, **characterized in that** an angle between the flow axis (SV) of the valve channel and the flow axis (SK1) of the first flow duct (1) is smaller than 60 degrees.

8. A heat exchanger according to any one of claims 1 to 7, **characterized in that** the valve element (8, 9, 10) comprises exactly one adjustable flap element (8).

9. The heat exchanger according to claim 8, **characterized in that** the flap element (8) is accommodated on a drivably rotatable shaft (9).

10. The heat exchanger according to claim 8 or 9, **characterized in that** the valve channel (6) comprises a separating wall (10) connecting to the flap element (8), wherein the valve channel (6) is divided at least in some regions into two valve channel halves (6a, 6b) by the separating wall (10).

11. A heat exchanger according to any one of claims 1 to 10, **characterized in that** the valve channel is connected to the housing, in particular welded thereto.

12. A heat exchanger according to any one of claims 1 to 11, **characterized in that** the valve channel (6) comprises a molding (16, 17), wherein the valve element (8, 9, 10) rests in a substantially planar manner against the molding (16, 17) at least in an end position.

13. The heat exchanger according to claim 12, **characterized in that** the valve channel (6) has a substantially circular cross-section.

14. The heat exchanger according to claim 12 or 13, **characterized in that** the molding (16, 17) can be configured by deforming a wall of the valve channel (6), in particular by pressing or embossing.

15. A heat exchanger according to any one of claims 1 to 14, **characterized in that** the second flow channel (2) has a double wall (3a, 20).

16. The heat exchanger according to claim 15, **characterized in that** the second flow channel comprises an inner tube (20), which is accommodated in a housing (3, 3a), wherein an outer surface of the inner tube (20) is disposed at a distance from the housing (3, 3a).

17. The heat exchanger according to claim 16, **characterized in that** the inner tube (20) comprises spacer means (21), by means of which the spacing of the inner tube (20) to the housing (3) can be fixed.

18. The heat exchanger according to claim 17, **characterized in that** the spacer means comprise a plurality of naps (21) disposed on the outer surface of the inner tube.

19. A heat exchanger according to any one of claims 16 to 18, **characterized in that** the inner tube is directly connected to a baffle plate (10), wherein the baffle plate (10) is disposed in the valve channel (6).

20. The heat exchanger according to claim 19, **characterized in that** a valve flap (8, 9) is disposed movably on the baffle plate.

21. The heat exchanger according to claim 19 or 20, **characterized in that** the valve channel (6) is directly connected to the housing (3).

22. heat exchanger according to any one of claims 1 to 21, **characterized in that** the valve element (8, 9, 10) is mounted rotatably on the valve channel (6) in only one supporting point (18).

23. A heat exchanger according to any one of claims 1 to 22, **characterized in that** the valve element (8, 9, 10) is mounted rotatably on the valve channel (6) in two spaced supporting points (18, 19).

## Revendications

1. Echangeur de chaleur pour des moteurs à combustion interne, comprenant
un premier conduit d'écoulement (1), de forme allongée, servant au passage de gaz d'échappement du moteur à combustion interne,
un deuxième conduit d'écoulement (2) servant au passage de gaz d'échappement et disposé en étant voisin du premier conduit d'écoulement (1),
une conduite (4) servant au passage d'un milieu, en particulier d'un liquide de refroidissement, et séparée du deuxième conduit d'écoulement (2),
où de l'énergie thermique peut être échangée entre les gaz d'échappement du premier conduit d'écoulement (1) et le milieu circulant dans la conduite (4), et
où de l'énergie thermique peut être échangée, au moins pas en quantité importante, entre les gaz d'échappement circulant dans le deuxième conduit d'écoulement (2), et le milieu circulant dans la conduite, et où le deuxième conduit d'écoulement (2) est disposé constamment de façon sensiblement parallèle au premier conduit d'écoulement (1), et comprenant un conduit de soupape (6) comportant un élément de soupape réglable (8, 9, 10) où, sous l'effet d'une position de l'élément de soupape (8, 9, 10), une répartition des gaz d'échappement est réglable sur le premier conduit d'écoulement (1) et sur le deuxième conduit d'écoulement (2),
**caractérisé en ce que** le premier conduit d'écoulement (1) et le deuxième conduit d'écoulement (2) sont logés dans un carter commun (3), et **en ce qu'**un axe d'écoulement (SV), côté entrée, du conduit de soupape présente une direction autre que celle d'un axe d'écoulement (SK1) du premier conduit d'écoulement où, dans la direction d'écoulement des gaz d'échappement, le conduit de soupape (6) est disposé en amont des conduits d'écoulement (1, 2), et un conduit d'admission (7) est disposé en amont du conduit de soupape (6), et où un axe d'écoulement (SE) du conduit d'admission présente une direction autre que celle de l'axe d'écoulement (SV) du conduit de soupape et autre que celle des axes d'écoulement (SK1, SK2) des conduits d'écoulement (1, 2).

2. Echangeur de chaleur selon la revendication 1, **caractérisé en ce qu'**un angle (W2) formé entre l'axe d'écoulement du conduit de soupape et l'axe d'écoulement (SE) du conduit d'admission est supérieur à 30 degrés.

3. Echangeur de chaleur selon la revendication 1 ou 2, **caractérisé en ce qu'**une longueur moyenne d'écoulement de l'un des conduits d'écoulement (1, 2) est au moins d'un facteur de deux supérieure à une longueur moyenne d'écoulement du conduit de soupape (6).

4. Echangeur de chaleur selon la revendication 1 ou 2, **caractérisé en ce qu'**une longueur moyenne d'écoulement de l'un des conduits d'écoulement (1, 2) est au moins d'un facteur de 2,5 supérieure à une longueur moyenne d'écoulement du conduit de soupape (6).

5. Echangeur de chaleur selon l'une quelconque des revendications 1 à 4, **caractérisé en ce qu'**un angle (W1) formé entre l'axe d'écoulement (SV) du conduit de soupape, et l'axe d'écoulement (SK1) du premier conduit d'écoulement, est supérieur à 30 degrés.

6. Echangeur de chaleur selon l'une quelconque des revendications 1 à 5, **caractérisé en ce qu'**un angle (W1) formé entre l'axe d'écoulement (SV) du conduit de soupape, et l'axe d'écoulement (SK1) du premier conduit d'écoulement (1), est supérieur à 40 degrés.

7. Echangeur de chaleur selon l'une quelconque des revendications 1 à 6, **caractérisé en ce qu'**un angle formé entre l'axe d'écoulement (SV) du conduit de soupape, et l'axe d'écoulement (SK1) du premier conduit d'écoulement, est intérieur à 60 degrés.

8. Echangeur de chaleur selon l'une quelconque des revendications 1 à 7, **caractérisé en ce que** l'élément de soupape (8, 9, 10) présente précisément un élément de clapet (8) réglable.

9. Echangeur de chaleur selon la revendication 8, **caractérisé en ce que** l'élément de clapet (8) est monté sur un arbre (9) pouvant être entraîné en rotation.

10. Echangeur de chaleur selon la revendication 8 ou 9, **caractérisé en ce que** le conduit de soupape (6) présente une paroi de séparation (10) faisant suite à l'élément de clapet (8), où le conduit de soupape (6) est subdivisé au moins partiellement en deux moitiés de conduit de soupape (6a, 6b), par la paroi de séparation (10).

11. Echangeur de chaleur selon l'une quelconque des revendications 1 à 10, **caractérisé en ce que** le conduit de soupape est assemblé, en particulier soudé au carter.

12. Echangeur de chaleur selon l'une quelconque des revendications 1 à 11, **caractérisé en ce que** le conduit de soupape (6) présente une partie saillante (16, 17), où l'élément de soupape (8, 9, 10) vient en appui, pratiquement à plat, sur la partie saillante (16, 17), au moins dans une position de fin de course.

13. Echangeur de chaleur selon la revendication 12, **caractérisé en ce que** le conduit de soupape (6) présente une section sensiblement de forme circulaire.

14. Echangeur de chaleur selon la revendication 12 ou 13, **caractérisé en ce que** la partie saillante (16, 17) peut être réalisée par déformation d'une paroi du conduit de soupape (6), en particulier par pression ou par matriçage.

15. Echangeur de chaleur selon l'une quelconque des revendications 1 à 14, **caractérisé en ce que** le deuxième conduit d'écoulement (2) présente une double paroi (3a, 20).

16. Echangeur de chaleur selon la revendication 15, **caractérisé en ce que** le deuxième conduit d'écoulement comprend un tube intérieur (20) qui est logé dans un carter (3, 3a), où une surface extérieure du tube intérieur (20) est espacée du carter (3, 3a).

17. Echangeur de chaleur selon la revendication 16, **caractérisé en ce que** le tube intérieur (20) comprend des moyens d'espacement (21) à l'aide desquels on peut déterminer l'espacement du tube intérieur (20) par rapport au carter (3).

18. Echangeur de chaleur selon la revendication 17, **caractérisé en ce que** les moyens d'espacement comprennent une pluralité de tétons (21) disposés sur la surface extérieure du tube intérieur.

19. Echangeur de chaleur selon l'une quelconque des revendications 16 à 18, **caractérisé en ce que** le tube intérieur est relié directement à une tôle déflectrice (10), où la tôle déflectrice (10) est disposée dans le conduit de soupape (6).

20. Echangeur de chaleur selon la revendication 19, **caractérisé en ce qu'**un clapet de soupape (8, 9) est disposé en étant mobile sur la tôle déflectrice.

21. Echangeur de chaleur selon la revendication 19 ou 20, **caractérisé en ce que** le conduit de soupape (6) est relié directement au carter (3).

22. Echangeur de chaleur selon l'une quelconque des revendications 1 à 21, **caractérisé en ce que** l'élément de soupape (8, 9, 10) est monté en rotation sur le conduit de soupape (6), seulement sur un point d'appui (18).

23. Echangeur de chaleur selon l'une quelconque des revendications 1 à 22, **caractérisé en ce que** l'élément de soupape (8, 9, 10) est monté en rotation sur le conduit de soupape (6), sur deux points d'appui (18, 19) espacés.
